# EUROPÄISCHE PATENTSCHRIFT

(11) **EP 1 552 594 B1**
(45) Veröffentlichungstag und Bekanntmachung des Hinweises auf die Patenterteilung: **30.06.2010**
(21) Anmeldenummer: 03773504.0
(22) Anmeldetag: 10.10.2003
(51) Int. Cl.: H02K 21/16, H02K 1/27

(54) **PERMANENTERREGTE SYNCHRONMASCHINE**
PERMANENT-FIELD SYNCHRONOUS MOTOR
MOTEUR SYNCHRONE A AIMANTS PERMANENTS

(30) Priorität: 18.10.2002 DE 10248771
(43) Veröffentlichungstag der Anmeldung: 13.07.2005
(73) Patentinhaber: SIEMENS AKTIENGESELLSCHAFT, 80333 München (DE)
(72) Erfinder: VOLLMER, Rolf, 36129 Gersfeld (DE)
(86) Internationale Anmeldenummer: PCT/DE2003/003364
(87) Internationale Veröffentlichungsnummer: WO 2004/038898

(56) Entgegenhaltungen:
- US-A- 6 133 663
- US-A1- 2002 130 575

## Beschreibung

Die Erfindung betrifft eine permanenterregte Synchronmaschine mit einem Stator mit Zahnschäften, die an ihren zum Luftspalt der Synchronmaschine weisenden Ende Zahnköpfe aufweisen, wobei in Umfangsrichtung benachbarte Zahnköpfe durch einen Nutschlitz voneinander beabstandet sind, mit einem Rotor, dessen Permanentmagnete in Flusskonzentrationsrichtung angeordnet sind. (Siehe die US-A1-2002/130 575 und die US-A-6 133 663).

Sobald die Zahnköpfe gattungsgemäßer elektrischer Maschinen einer erhöhten Luftspaltdichte ausgesetzt sind, gehen diese in Sättigung. Dies führt zu erhöhten Verlusten. Dieses Problem wurde in der Vergangenheit dadurch umgangen, dass derartige Luftspaltflussdichten vermieden wurden. Die radiale Ausdehnung der Zahnköpfe wurde dabei möglichst gering gehalten, um einen möglichst großen Nutenquerschnitt zu erhalten.

Der Erfindung liegt nunmehr die Aufgabe zugrunde eine permanenterregte Synchronmaschine zu schaffen, die auch mit erhöhter Luftspaltflussdichte wirksam eingesetzt werden kann.

Die Lösung der gestellten Aufgabe gelingt durch eine permanenterregte Synchronmaschine, mit einem Stator mit Zahnschäften, die an ihrem zum Luftspalt der Synchronmaschine weisenden Ende Zahnköpfe aufweisen, wobei sich in Umfangsrichtung benachbarte Zahnköpfe durch einen Nutschlitz voneinander beabstandet sind, mit einem Rotor, dessen Permanentmagnete in Flusskonzentrationsrichtung angeordnet sind, einen Teilungsverhältnis von Zahnteilung zu Polteilung, von τzb/τp von ≥ 2,5 aufweisen und die Zahnköpfe Mittel aufweisen um Sättigungserscheinungen zu vermeiden.

Insbesondere bei einem Zahnteilungs- zum Polteilungsverhältnis von τzb/τp von ≥ 2,5 und einer Flusskonzentrationseinrichtung der Permanentmagnete des Rotors tritt diese Luftspaltflussdichte auf, die die Zahnköpfe in Sättigung treibt. Die Zahnköpfe sind aber gemäß Anspruch 1 derartig ausgeführt, dass die Sättigungserscheinungen vermieden werden. Dabei wird vorteilhafterweise die Zahnhöhe des Zahnkopfes einer erfindungsgemäßen Synchronmaschine der konstruktionsbedingten Luftspaltflussdichte angepasst. Dies ist insofern notwendig, da sich die Flusslinien über die Zahnköpfe zu benachbarten Permanentmagneten schließen. Ein Verlauf der Flusslinie im Zahnschaft oder im Jochrücken des Stators ist nicht notwendig. Vorteilhafterweise können somit konstruktiv ganz neue Wege beschritten werden, da der Jochrücken und der Zahnschaft für derartige Flussdichten nicht mehr auszulegen sind. D.h., sowohl Zahnschaft als auch Jochrücken können wesentlich schmäler dimensioniert werden, so dass sich geringere Einbauhöhen ergeben.

In einer besonders vorteilhaften Ausprägung sind lediglich die Zahnköpfe aus magnetisierbarem Material und Zahnschaft und Jochrücken sind aus amagnetischem Material aufgebaut. Dabei können diese Materialien aus Kunststoffen, die wesentlich leichter als Eisen sind, hergestellt werden. Dies entspricht einem sternförmigen Aufbau des Stators.

In einer weiteren Ausführungsform sind die Nutschlitze außermittig bezüglich der Symmetrieachsen benachbarter Zahnschäfte angeordnet. Dabei sind nur die Zahnschäfte mit breiteren Zahnköpfen mit Polspulen versehen. Vorteilhafterweise sind insbesondere diese Zahnschäfte schnappbar am Jochrücken zu befestigen, so dass die Polspulen vorher aufsetzbar ist.

Die Erfindung sowie weitere vorteilhafte Ausgestaltungen der Erfindung gemäß Merkmale der Unteransprüche werden im folgenden anhand schematisch dargestellter Ausführungsbeispiele in der Zeichnung näher erläutert. Darin zeigen:
- FIG 1: einen Abschnitt des Stators mit Zahnschäften und Zahn- köpfen,
- FIG 2: bis 4 jeweils unterschiedlich ausgebildete Zahnköpfe,
- FIG 5: einen Querschnitt eines erfindungsgemäßen Stators mit Rotor.

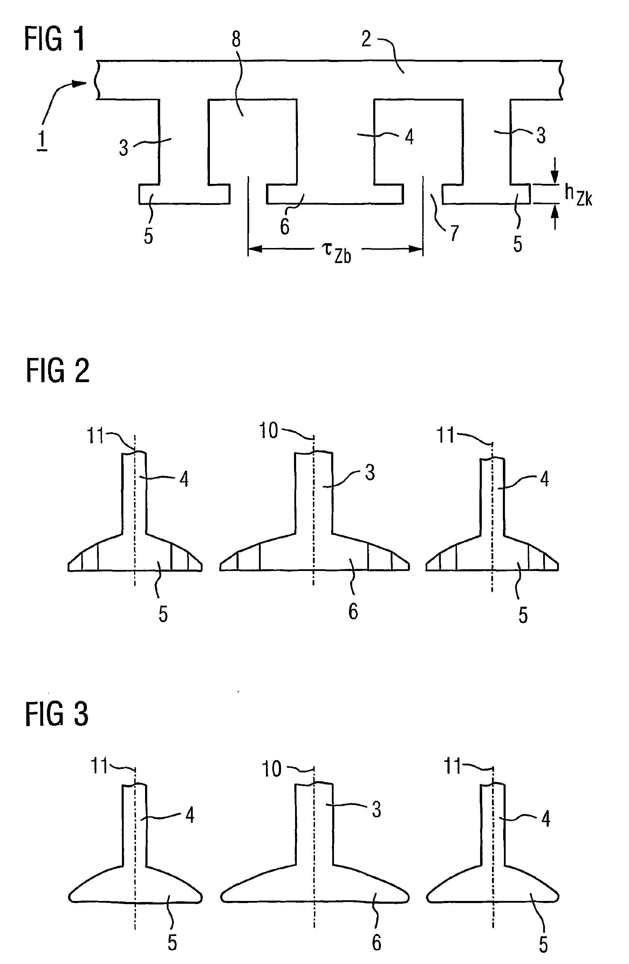

FIG 1 zeigt einen abschnittsweisen dargestellten Stator 1 mit seinem Joch 2 und seinen nach innen zu einem Luftspalt ragenden Zahnschäften 3 und 4, die an ihrer zum Luftspalt weisenden Seite Zahnköpfe 5 und 6 aufweisen. Die Zahnschäfte 3 und 4 sind unterschiedlich ausgeformt, da die Zahnkopflänge in Umfangsrichtung betrachtet unterschiedlich sind. Es ist davon auszugehen, dass die Zahnschäfte im Betrieb unterschiedlichen Fluss leiten müssen. Die Zahnkopfhöhe h_{zk} der Zahnköpfe 5,6 ist vorteilhafterweise gleich ausgebildet, was aber nicht erforderlich ist. Die Zahnköpfe 5,6 müssen so ausgeführt sein, dass Sättigungserscheinungen vermieden werden. Dabei sind beispielsweise auch für die Zahnköpfe 5,6 verschiedene Zahnkopfformen gemäß FIG 2 bis FIG 4 einsetzbar. Zwischen den Nutschlitzen 7 befindet sich die Zahnteilung τ_{zp bzw}. τ_{zs}. Die Nuten 8 sind in dem gezeigten Ausführungsbeispiel als halboffene Nuten mit Nutschlitzen 7 und der Nutschlitzbreite b ausgebildet.

Weitere Ausführungsformen der Zahnköpfe sind in den Figuren 2 bis 4 dargestellt und dienen zum einen der Flussleitung und führen andererseits zur Gewichteinsparung. Dabei ist in den Randbezirken links und rechts der Symmetrieachse 10, 11 der Zahnschäfte 3 und 4 der Zahn weniger hoch ausgeführt als in den näher bei der Symmetrieachse 10, 11 befindlichen Teile. Dies schafft eine weitere Gewichtsersparnis und Materialkosten.

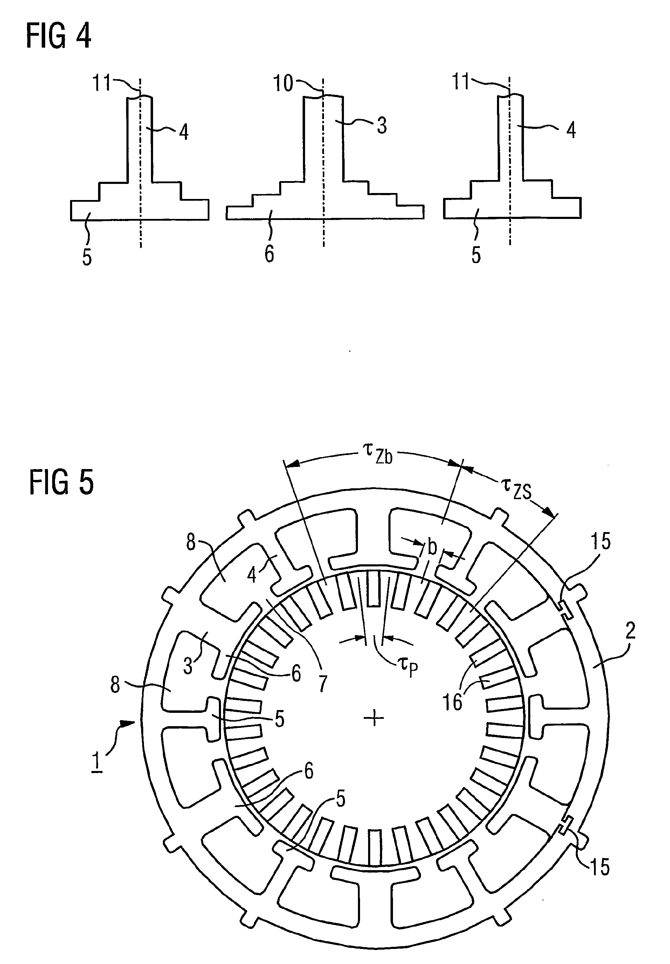

In einem Ausführungsbeispiel gemäß FIG 5 sind bei gleichen Zahnkopfhöhen h_{zk} und unterschiedlichen Zahnteilungen τ_{zp}, τ_{zs} die einzelnen Blechschnitte gezeigt. Aufgrund der konstruktiven Gegebenheiten des Rotors mit seiner in Flusskonzentration angeordneten Permanentmagneten 16 und dem erfindungsgemäßen Stator 1 sind die Zahnschäfte 3,4 als auch der Rücken des Jochs 2 im Vergleich zu herkömmlichen elektrischen Maschinen mit geringeren Dimensionen auszulegen, da sich das Magnetfeld der Permanentmagnete 16 im wesentlichen über die Zahnköpfe 5, 6 schließt. Damit entstehen vergleichsweise große Nutflächen für die Wicklungen, insbesondere aus Kupfer.

Die einzelnen Zahnschäfte 3, 4 bzw. Zahnköpfe 5, 6 sind als Alternative zu einem einteiligen Blechschnitt auch durch form- und/oder reibschlüssige Verbindungsarten 15 im Rücken des Jochs 2 zu positionieren. Es ist ebenso denkbar eine Mischform von einteiligen Blechschnitten mit mehrteiligen Blechschnitten zu kombinieren.

## Patentansprüche

1. Permanenterregte Synchronmaschine mit einem Stator mit Zahnschäften (3,4), die an ihrem zum Luftspalt der Synchronmaschine weisenden Ende Zahnköpfe (5,6) aufweisen, wobei in Umfangsrichtung benachbarte Zahnköpfe (5,6) durch einen Nutschlitz (7) voneinander beabstandet sind, mit einem Rotor, dessen Permanentmagnete in Flusskonzentrationsrichtung angeordnet sind, einem Teilungsverhältnis von Zahnteilung zu Polteilung, von τzb/τp von ≥ 2,5 aufweisen und die Zahnköpfe (5,6) Mittel aufweisen um Sättigungserscheinungen zu vermeiden.

2. Permanenterregte Synchronmaschine nach Anspruch 1, **dadurch gekennzeichnet, dass** die Zahnköpfe (5,6) in Umfangsrichtung betrachtet gleiche Höhen h_{ZK} aufweisen.

3. Permanenterregte Synchronmaschine nach Anspruch 1 oder 2, **dadurch gekennzeichnet, dass** die Höhe eines Zahnkopfes (5,6) h_{zk} mindestens ab der Stelle τp/2 der Bedingung h_{zk} ≥ τp/2 genügt, wobei die Nutschlitzbreite b ≤ τp/2 ist.

4. Permanenterregte Synchronmaschine nach einem der vorhergehenden Ansprüche, **dadurch gekennzeichnet, dass** der Stator (1) sternförmig ausgebildet ist.

5. Permanenterregte Synchronmaschine nach einem der vorhergehenden Ansprüche, **dadurch gekennzeichnet, dass** der Stator (1) unterschiedliche Materialien aufweist.

6. Permanenterregte Synchronmaschine nach einem der vorhergehenden Ansprüche, **dadurch gekennzeichnet, dass** der Stator (1) in Umfangsrichtung betrachtet unterschiedliche Zahnteilungen aufweist, d.h. dass die Nutschlitze (7) nicht mittig zwischen den Symmetrieachsen der Zahnschäfte (3,4) angeordnet sind.

7. Permanenterregte Synchronmaschine nach einem der vorhergehenden Ansprüche, **dadurch gekennzeichnet, dass** der Stator (1) aus axial geschichteten Blechen besteht, die sowohl aus einzelnen voneinander unabhängigen Blechsegmenten als auch einteilig ausgeführt sind und in einer vorgebbaren Reihenfolge anordenbar sind.

## Claims

1. Permanent magnet synchronous machine with a stator with a plurality of teeth (3,4) which, at their end pointing towards the air gap of the synchronous machine, feature tooth heads (5,6), with adjacent tooth heads (5,6) being spaced from one another in the circumferential direction by a slot opening (7), with a rotor, of which the permanent magnets are arranged in the flux concentration direction, having a pitch ratio of tooth pitch to pole pitch of τzb/τp of ≥ 2.5 and the tooth heads (5,6) featuring means for avoiding occurrences of saturation.

2. Permanent magnet synchronous machine according to claim 1, **characterised in that** the tooth heads (5, 6) have the same heights h_{zk} viewed in the circumferential direction.

3. Permanent magnet synchronous machine according to claim 1 or 2, **characterised in that** the height of a tooth head (5,6) h_{zk} satisfies the condition h_{zk} ≥ τp/2 at least from the point τp/2, with the slot opening width being b ≤ τp/2.

4. Permanent magnet synchronous machine according to one of the previous claims, **characterised in that** the stator (1) has a star-shaped configuration.

5. Permanent magnet synchronous machine according to one of the previous clams, **characterised in that** the stator (1) features different materials.

6. Permanent magnet synchronous machine according to one of the previous clams, **characterised in that** the stator (1), viewed in the circumferential direction, features different tooth pitches, i.e. that the slot openings (7) are not arranged centrally between the axes of symmetry of the plurality of teeth (3,4).

7. Permanent magnet synchronous machine according to one of the previous clams, **characterised in that** the stator (1) consists of axial-stacked laminations which are made of single segmental sheets or are of single-piece construction and are able to be arranged in a predeterminable sequence.

## Revendications

1. Moteur synchrone à aimants permanents comprenant un stator ayant des tiges ( 3, 4 ) de dent, qui ont des têtes ( 5, 6 ) de dent tournées vers l'entrefer du moteur synchrone, dans lequel des têtes ( 5, 6 ) de dent voisines dans la direction périphérique sont à distance l'une de l'autre par une fente ( 7 ) formant gorge, comprenant un rotor dont les aimants permanents sont disposés dans la direction de concentration du flux, ont un rapport du pas des dents au pas des pôles de τzb/τp ≥ 2,5 et les têtes ( 5, 6 ) de dent ont des moyens pour empêcher des phénomènes de saturation.

2. Moteur synchrone à aimants permanents suivant la revendication 1, **caractérisé en ce que** les têtes ( 5, 6 ) de dent ont, considéré dans la direction périphérique, la même hauteur h_{ZK}.

3. Moteur synchrone à aimants permanents suivant la revendication 1 ou 2, **caractérisé en ce que** la hauteur d'une tête ( 5, 6 ) de dent h_{ZK} satisfait au moins à partir du point τp/2, la condition h_{ZK} ≥ τp/2, b ≤ τp/2 étant la largeur de la fente formant gorge.

4. Moteur synchrone à aimants permanents suivant l'une des revendications précédentes, **caractérisé en ce que** le stator ( 1 ) est constitué en étoile.

5. Moteur synchrone à aimants permanents suivant l'une des revendications précédentes, **caractérisé en ce que** le stator ( 1 ) comporte des matériaux différents.

6. Moteur synchrone à aimants permanents suivant l'une des revendications précédentes, **caractérisé en ce que** le stator ( 1 ) a, considéré dans la direction périphérique, des pas de dent différents, c'est-à-dire que les fentes ( 7 ) formant gorges ne sont pas disposées au milieu entre les axes de symétrie des tiges ( 3, 4 ) de dent.

7. Moteur synchrone à aimants permanents suivant l'une des revendications précédentes, **caractérisé en ce que** le stator ( 1 ) est constitué de tôles feuilletées axialement, qui sont réalisées tant en segments individuels de tôle indépendants les uns des autres qu'en une seule pièce et qui peuvent être disposées suivant une succession pouvant être prescrite.
